# EUROPEAN PATENT SPECIFICATION

(11) **EP 1 606 503 B1**
(45) Date of publication and mention of the grant of the patent: **26.11.2008**
(21) Application number: 04710067.2
(22) Date of filing: 11.02.2004
(51) Int. Cl.: F02D 35/00

(54) **ON BOARD DIAGNOSTICS (OBD)**
ON-BORD-DIAGNOSE (OBD)
DIAGNOSTIC EMBARQUE (OBD)

(30) Priority: 14.02.2003 GB 0303477
(43) Date of publication of application: 21.12.2005
(73) Proprietor: RICARDO UK LIMITED, Shoreham-by-Sea, West Sussex BN43 5FG (GB)
(72) Inventor: FUSSEY, Peter Michael, Hove, Sussex BN3 4LP (GB); ORMEROD, Michael John, Rustington, West Sussex BN16 2QE (GB)
(74) Representative: Hibbert, Juliet Jane Grace
(86) International application number: PCT/GB2004/000496
(87) International publication number: WO 2004/072460

(56) References cited:
- WO-A-02/053398
- DE-A- 19 945 374
- US-A- 6 076 034
- PATENT ABSTRACTS OF JAPAN vol. 2000, no. 14, 5 March 2001 (2001-03-05) & JP 2000 306200 A (DENSO CORP), 2 November 2000 (2000-11-02)

## Description

This invention relates to the use of electronic horizon information within On Board Diagnostics (OBD) strategies, in particular for engine control, for example vehicle engine control.

On Board Diagnostics (OBD) is a system for detecting and recording errors. In a vehicular system, a unit monitors a control unit and vehicular system responses for errors during normal vehicle operations. The system alerts the driver (e.g. by a dashboard light) if malfunctions or deterioration occurs. In addition, when the vehicle is serviced, this information on the errors can be down loaded and displayed to the service personnel which may facilitate the trouble shooting process. The OBD system involves a number of sensors and a data processor, which is typically integrated with the vehicle's electronic management system.

In particular OBD is used to detect and record errors affecting emissions within an engine control system. Emission OBD currently applies to passenger cars and light commercial and medium duty vehicles and will apply to heavy duty vehicles. Geographically the legislation is in force in USA and Europe and will apply in Japan.

The motivation is to ensure that vehicles do not emit high levels of emissions due to a defect in the vehicle. This is relevant now because defects can lead to very high vehicle emissions (e.g. a failed three way catalyst can produce more than 10 times the emissions of a working one). The OBD system allows the driver to be alerted to this problem.

US6843240 describe a method for monitoring the functioning of an NOx sensor which is arranged in an exhaust gas channel of an internal combustion engine and which is located downstream from an NOx storage catalytic converter. The aim is to detect the faulty functioning of the NOx sensor in a simple manner in order to be able to take appropriate measures if necessary. To this end, the mass of NOx absorbed by the NOx storage catalytic converter is determined within a diagnostic period using a measurement signal of the NOx sensor while, at the same time, an absorbed NOx specified mass is calculated using a model for the NOx storage catalytic converter, and a ratio of the NOx mass to the NOx specified mass is compared to the predetermined limit values. A duration for a complete NOx regeneration of the NOx storage catalytic converter is measured, by calculating a specified duration for the NOx regeneration using a model for the NOx storage catalytic converter and using a measured or calculated NOx load state, and by comparing a ratio of the duration to the specified duration with predetermined limit values.

US6076034 describes a vehicle driving controller for reducing a feeling of incompatibility of a driver. Such a vehicle driving controller has a first detecting section for detecting a drive environment of a vehicle, a second detecting section for detecting a throttle opening of the vehicle, a driving control signal calculating section for outputting a driving control signal through calculations based on an output signal relating to the drive environment of the vehicle from the first detecting section in response to an output signal of the second detecting section relating to the throttle opening of the vehicle, and a driving control section for controlling driving of the vehicle on the basis of the driving control signal outputted from the driving control signal calculating section.

JP2000306200 relates to controlling a vehicle to prevent degradation of the running feeling of the vehicle as much as possible. Information related to the present position which is moved in accordance with running of the vehicle is calculated and acquired, and a road where the vehicle is running is settled based on stored map information. Curve information or ascending/descending slope information in a predetermined road where the vehicle will run is calculated based on map information, and the degree of throttle opening is controlled in accordance with calculated and obtained curve information or ascending/ descending slope information, and thereafter, transmission control is performed to realize speed control of the vehicle.

WO02053398 relates to a system for operating a coupled anti-roll bar on a motor vehicle, whereby the anti-roll bar may be released by means of a coupling. Means are provided which determine the environment in front of the vehicle and the operation of the coupling occurs dependent upon the determined environment. The roadway in front of the vehicle and/or obstacles in front of the vehicle are, in particular, determined as environment.

The invention will now be described further, by way of example only, with reference to the accompanying drawings, in which:
Figure 1 shows a summary of the timescales for OBD legislation;
Table 1 shows an example of light duty OBD requirements; and
Figure 2 shows a schematic drawing illustrating OBD and electronic horizon integration of the invention.

The invention relates to a method and apparatus for on board diagnostics for a system. The on board diagnostics comprises carrying out one or more diagnostic steps with respect to one or more functions of the system. An electronic horizon system, which provides information relating to predicted and/or prospective system-influencing factors, is used to determine the optimum conditions, e.g. the period, in which to carry out at least one of the diagnostic steps. Thus integration of OBD and electronic horizon information is performed.

The invention will be described with reference to a vehicular system and in particular to the emissions from a vehicle. However the invention is also applicable to other systems and to other vehicular characteristics.

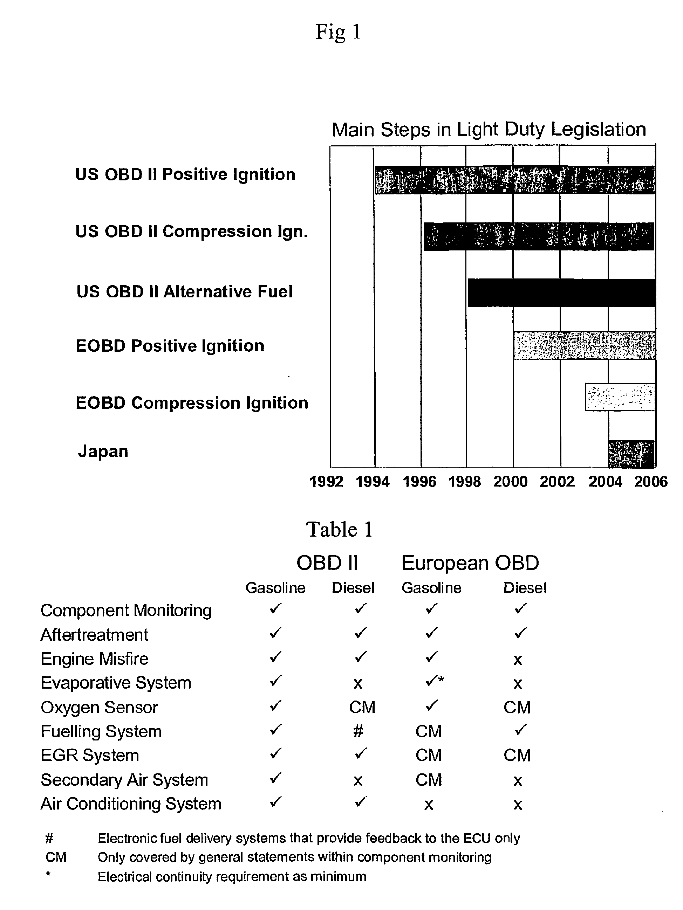

The timescales for OBD legislation are summarised in figure 1. Note OBD1 California started in 1985 for 1988 MY onwards. The light duty current requirements are summarised in table 1.

Looking forward, the new European OBD threshold (EURO IV) will apply, at MY 2005, only to positive ignition engines. Their application to compression ignition engines will come later, probably at MY 2008, with most noticeable changes in the EOBD limits principally affecting NOx and Particulates. The misfire monitoring is unlikely to be introduced in the near future however, as a more evolved Exhaust Gas Re-circulation (EGR) system diagnosis is likely to be required.

To ensure that the observation strategies are run frequently enough, a measure of the frequency at which every OBD diagnosis is run will probably be included as a parameter. This may take the form of the ratio of N/D, where N is a counter that increments on a trip if (and only if) all conditions, except the actual fail criteria, that are required to identify a fault have been met and D is a counter which increments on a particular trip if the standard trip definition conditions have been met. D will increment at most once per trip. The N/D ratio indicates the frequency at which every OBD diagnosis is run.

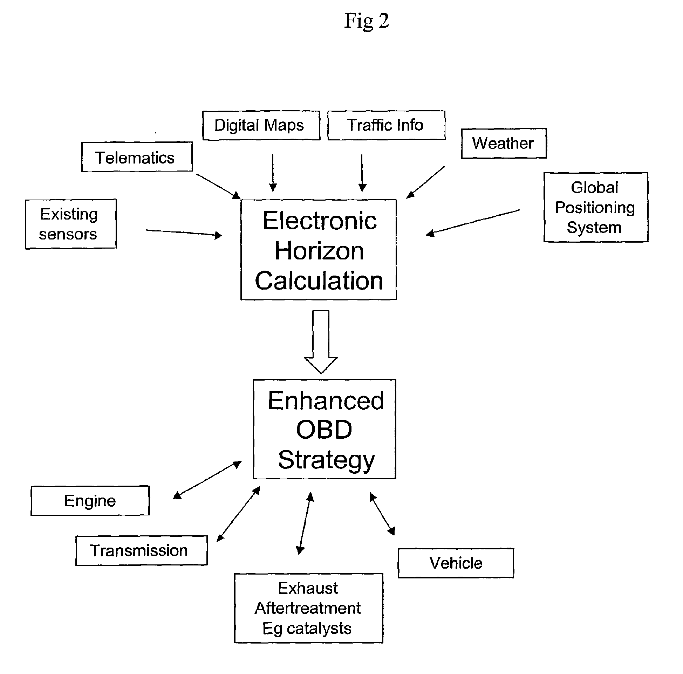

Figure 2 shoes shows a schematic drawing illustrating OBD and electronic horizon integration. The OBD system monitors characteristics of a vehicle. For example, the OBD system monitors the engine, the transmission, the exhaust and its after-treatment (e.g. catalysts) and the vehicle itself. The electronic horizon system collects information relating to prospective system-influencing factors such as from existing sensors of the vehicle (e.g. temperature sensors), telematics, digital maps, traffic information received from transmitters external to the vehicle (e.g. wireless transmitters), weather information and current conditions, and Global Positioning System (GPS) information.

The electronic horizon system is used to determine the optimum conditions for the OBD system to carry out at least one of the diagnostic steps. For example this could be the optimum timing for the diagnostic step, the optimum frequency etc.

For a typical Diesel passenger car application, the components, systems and after-treatment that need to be monitored by the emission OBD system typically include any emissions-relevant sensors and actuators - their relevance should be demonstrated as part of the process. Examples of these emission-relevant sensors and actuators are given below:

### Components

- Mass Air Flow (MAF)
- Boost sensor
- Variable Geometry Turbo (VGT) actuator
- EGR valve actuator & position sensor (if present)
- EGR throttle actuator + position sensor (if present)
- Rail pressure sensor
- Rail pressure governor
- Swirl control valve (if 4 valves per cyl.)
- Fuel pressure sensor
- Fuel pressure governor
- Injectors
- Crankshaft sensor
- Camshaft sensor
- Coolant temperature sensor *
- Intake manifold temperature sensor *
- Atmospheric pressure sensor (if present) *
* Relevant to enable other diagnosis algorithm

### Systems

- EGR system
- Fuel system

### After-treatment

- Oxidation Catalyst
- Diesel Particulate Filter (DPF)
- Lean NOx Trap (LNT)

To validate an OBD strategy, the vehicle development typically passes through the following stages with the final tests being witnessed by the relevant authorities.
- Demonstrate the correct detection of the fault over a preparation cycle followed by a normal emissions cycle
- Demonstrate a Malfunction Indication Light (MIL) illumination before the end of the normal emission cycle
- Demonstrate emissions below the OBD emission threshold, for North America this is a threshold multiple of the emission standard and in Europe this is a fixed value.
- Plausibility checks - need to confirm the detection over an emission cycle
- Demonstrate that readiness codes can be set during an emission cycle (some will need negotiation with regulatory bodies (e.g. CARB in California) as they cannot be completed over this cycle)
- Present emissions data and evidence that the OBD strategy detects borderline components - and supply these borderline components to CARB for testing.

Currently the OBD testing is carried out over the standard legislative emissions cycle. An emissions test cycle is a standardised cycle to evaluate fuel consumption and emissions.

The electronic horizon can be defined as the predicted information presented to the vehicle so it can "see" the road ahead, not only in form (direction and gradient) but in aspects such as road condition, traffic loading, accidents, weather conditions, number of lanes, class of road etc. Thus the electronic horizon provides information relating to prospective system-influencing factors. The electronic horizon may relate to the prospective journey to be undertaken by the vehicle and may cover the vehicle's previous, current and estimated future states.

Other examples of information provided by means of the so-called electronic horizon are information relating to predicted prospective undertakings of the system, continuous monitoring and analysis of the vehicle's environment, monitoring of driving environment and prospective route, and preview of the road ahead.

Some examples of areas where control engineers who are developing OBD strategies could use the electronic horizon to complement and control the OBD are given below. These are not intended to be limiting but merely illustrative of possible uses.

### Minimise Intrusive Diagnostics

A number of after-treatment diagnostic strategies involve altering the engine operation in order to generate a known response across the after-treatment device. This allows the performance of the after-treatment device to be assessed. The electronic horizon could be used to confirm that the vehicle will be at a suitable operating point for the duration of the diagnosis and therefore reduce the number of aborted OBD diagnosis runs. For example, the electronic horizon could identify that the vehicle will be stopping at an upcoming traffic light and should wait until this has passed before starting the diagnostic routine.

This could save fuel, reduce emissions and improve the life of the after-treatment device.

### Raise the N/D ratio

The N/D ratio will be introduced as an OBD parameter in the near future (currently 2005). In the future the N/D ratio will rise increasing the number of times the diagnostics routine is run during a route. The electronic horizon will help the vehicle since if it knows the route that it will follow, it can either increase or reduce the number of diagnosis routines it runs. For example, if it is on a short route then in order to maintain the N/D ratio, it will have to try to run the diagnosis routine at more compromised points. If it is a longer route, then it can wait for points when the diagnosis will run better.

This could increase the N/D ratio and improve the implementation of the diagnosis scheduling.

### Improve the OBD strategies for vehicles with auto stop/start

There is a move to introduce vehicles with automatic engine stop and start to reduce fuel consumption and emissions. This does however reduce the amount of time that the engine idles. A number of OBD strategies use the idle operating point as one of their diagnosis points so removing it has consequences for the N/D ratio and some of the strategies that only operate at idle.

For those strategies that must run at idle, the electronic horizon would help the OBD decide when to disable the auto stop in order to run the OBD at idle.

For those strategies that can be run at other operating points, the electronic horizon information could help schedule the diagnosis routines and increase the number of diagnosis routines (increase N)

The benefit here is that the OBD strategies will be feasible and should be implemented more efficiently.

### Reduce the RAM and processor loading

The diagnostic routines are occupying more and more of the control unit's RAM and processor capacity, currently up to 65% of the Electric Control Unit (ECU). This will rise as the systems that they are trying to monitor get more complex. The electronic horizon could be used to schedule the diagnosis routines. This will help to reduce the number of aborted diagnoses.

The reduction in processor loading due to reduced OBD strategies would have to be offset against any increase involved in implementing the electronic horizon, however this may already be available for other reasons such as e Safety or advanced energy management.

The benefits in reduced processor loading could be manifested as lower specification processors and lower RAM requirements.

### Integration of electronic horizon with existing OBD strategies

Current light duty requirements for OBD II cover the following areas:
- Comprehensive Component Monitoring
- After-treatment
- Engine Misfire
- Evaporative system
- Oxygen sensor
- Fuelling system
- EGR system
- Secondary air system
- Air-conditioning system
- PCV monitoring
- Engine cooling
- Cold start emission reduction strategy monitoring

These will be examined in turn to discuss the integration of electronic horizon with these strategies.

### Comprehensive Component Monitoring

Component monitoring is a general topic that includes some of the subsequent areas. It is used to describe the monitoring strategies for any electronic powertrain components/system that provides input to or receives commands from the on board computers and can affect emissions during any reasonable in-use driving condition, or is used as part of the diagnostic strategy of another component.

This covers both electrically and also using plausibility checks. The electrical faults can include open circuit, shorting to ground or battery voltage for both inputs and outputs. The plausibility checks can include using other sensors or known engine conditions to check values in the control unit. For example, using the manifold pressure sensor at key on to check the ambient pressure sensor.

Some of these strategies are time/condition related so they could benefit from improved scheduling as provided by using the electronic horizon to influence the OBD process, as described above.

### After-treatment

Gasoline after-treatment monitoring typically monitors the three way catalyst (TWC). As the TWC ages, its performance deteriorates and this typically manifests itself by an increase in light-off time coupled with a deterioration in conversion efficiency once the catalyst has lit off. Most strategies monitor the conversion efficiency after light off however with tighter limits coming into force, the light off time may also be required.

For the diesel after-treatment, some of the diagnostics could be intrusive, for example monitoring the heat release over an oxidation catalyst following a known post injection of fuel. These would benefit as discussed earlier with reference to the minimisation of intrusive diagnostics.

### Engine Misfire

There are two main techniques used for monitoring the engine for engine misfires: crankshaft velocity and ion sensing. The crankshaft velocity method uses an existing crankshaft sensor and monitors this for a deceleration during a firing event. The ion sensing method uses ion sensors integrated into the spark plugs to directly sense misfire. The gasoline strategies include a rough road flag. The use of the rough road flag could be improved with more detailed information from the electronic horizon.

### Evaporative system

The monitoring of the evaporative system involves monitoring the whole system for leaks and/or blockages over a cycle, for example over the American Federal Test Procedure (FTP) cycle.

The methods currently in use create a pressure difference between the evaporative system and the atmosphere and then monitor the pressure over a period of time to look for leaks.

Often the evaporation purge strategy runs at idle so similar issues arise as those discussed with reference to the auto stop/start scenario described earlier. For engine-off diagnostics on some gasoline systems, the location information provided by the electronic horizon may also be used to improve the initiation of the strategy. If for example the vehicle knows its location then it can use this to determine whether the vehicle has stopped for the night, or the driver has gone out to the cinema and will drive home in a couple of hours.

### Oxygen sensor

Typically the gasoline oxygen sensor is monitored by looking at the response during closed loop lambda control as the lambda goes from rich to lean and lean to rich.

This strategy may have no need for the electronic horizon information.

Gasoline catalyst downstream diagnostics depend on an intrusive step in fuelling, which could be replaced if the electronic horizon could predict a hill where there would naturally be a richer operation. This would give a more environmentally friendly solution.

Also applicable here are the overrun lambda diagnostics which follow a similar strategy.

### Fuelling system

The fuelling system needs to be monitored for failures beyond the capabilities of the adaptive correction system. Typical failures include:
- Low (or high) fuel pressure (failed pump, regulator or filter)
- Low (or high) flow injectors
- Air leaks that bypass the MAF
- Offset pressure or MAF sensors

The system will rely on the adaptive correction system to compensate for a gradual deterioration of the fuel system and then flag a fault when the adaptions exceed a threshold.

This strategy may have no need for the electronic horizon information.

### EGR system

The EGR system is monitored by assessing measured parameters and comparing them to expected ranges. These parameters can include:
- Temperatures
- Pressures
- Air flow
- Air fuel ratio sensor

Typical faults include:
- Open circuit or short circuit of EGR valve
- EGR valve stuck
- Pipe blocked or leaking

This strategy may have no need for the electronic horizon information.

### Secondary air system

The secondary air systems introduce air into the exhaust to improve light off time. Typical diagnostic strategies use the oxygen sensor to check that the gas entering the catalyst is lean. If it sees rich air when the secondary air system is operating then it can register a fault.

This strategy may have no need for the electronic horizon information.

### Air-conditioning system

If the air conditioning system alters the off-idle fuel and/or spark control when the A/C system is on then the OBD system shall monitor all electronic air conditioning system components for faults that cause the system to fail to invoke the alternative control while the system is on or to invoke the alternate control while the A/C system is off. For assessing these effects the SC03 cycle (updated for hybrid vehicles as detailed in [2]) should be used.

This strategy may have no need for the electronic horizon information.

### PCV monitoring

Whilst the Positive Crankcase Ventilation is not a current requirement for OBD legislation, it will be introduced from MY2004 and is currently being phased in. This strategy is designed to detect the disconnection of the PCV from the crankcase or inlet manifold.

This strategy may have no need for the electronic horizon information.

### Engine cooling

The OBD strategy monitors the thermostat and the engine coolant temperature sensor for faults. The aim of these strategies is to ensure that the engine warms up correctly.

This strategy may have no need for the electronic horizon information.

### Cold start emission reduction strategy monitoring

The cold start OBD strategy is to monitor the specific engine control strategies that reduce cold start emissions. The OBD system will monitor the key control or feedback parameters (e.g. engine speed, mass air flow etc) to ensure proper operation of the control strategy.

This strategy may have no need for the electronic horizon information.

An implementation of the OBD system as described may be provided in the form of a computer program comprising code means for performing the steps as described herein when said program is run on a computer or a microprocessor.

Thus there is provided a system in which the OBD strategies are enhanced with information from the electronic horizon, which allows the OBD strategies to anticipate the vehicle's upcoming route, weather, traffic, etc.

### REFERENCES

[1] SAE Recommended Practice for Measuring the Exhaust Emissions and Fuel Economy of Hybrid Electric Vehicles, SAE J1711
[2] California exhaust emission standards and test procedures for 2003 and subsequent model zero-emission vehicles, and 2001 and subsequent model hybrid electric vehicles, in the passenger car, light-duty truck and medium-duty vehicle classes, Aug. 1999,
   (http://www.arb.ca.gov/msprog/levprog/test_proc.htm)
[3] Modifications to Malfunction and Diagnostic System Requirements for 2004 and Subsequent Model-Year Passenger Cars, Light-Duty Trucks, and Medium-Duty Vehicles and Engines (OBD II), Section 1968.2, Title 13, California Code Regulations (http://www.arb.ca.gov/regact/obd02/obd02.htm)
[4] California Air Resources Board - Public Hearing 25th-26th April 2002

## Claims

1. A method of on board diagnostics for a system, the method comprising carrying out one or more diagnostic steps with respect to one or more functions of the system, wherein the method comprises using information relating to prospective system-influencing factors to determine the optimum conditions in which to carry out at least one of the diagnostic steps.

2. A method according to claim 1 wherein the system is a vehicular system.

3. A method according to claim 2 wherein the information relating to prospective system-influencing factors relates to the prospective journey to be undertaken by the vehicle.

4. A method according to claim 3 wherein the information relating to prospective system-influencing factors comprises information on at least one of the following: the direction of the road ahead; the gradient of the road ahead; road condition; traffic loading; accidents; weather conditions; number of lanes; and class of road.

5. A method according to any preceding claim wherein the diagnostic steps relate to the emissions from the system.

6. A method according to any preceding claim wherein the information relating to prospective system-influencing factors comprises Global Positioning System (GPS) information.

7. An on board diagnostics apparatus for a system, the apparatus being arranged to carry out one or more diagnostic steps with respect to one or more functions of the system, wherein the apparatus is arranged to use information relating to prospective system-influencing factors to determine the optimum conditions in which to carry out at least one of the diagnostic steps.

8. Apparatus according to claim 7 wherein the system is a vehicular system.

9. Apparatus according to claim 8 wherein the information relating to prospective system-influencing factors relates to the prospective journey to be undertaken by the vehicle.

10. Apparatus according to claim 9 wherein the information relating to prospective system-influencing factors comprises information on at least one of the following: the direction of the road ahead; the gradient of the road ahead; road condition; traffic loading; accidents; weather conditions; number of lanes; and class of road.

11. Apparatus according to any of claims 7 to 10 wherein the information relating to prospective system-influencing factors comprises Global Positioning System (GPS) information.

12. A computer program comprising code means for performing the steps of any of the claims I to 6 when said program is run on a computer or a microprocessor.

## Patentansprüche

1. Verfahren zur On-board-Diagnose für ein System, wobei das Verfahren das Durchführen eines oder mehrerer Diagnoseschritts/e hinsichtlich einer oder mehrerer Sytemfunktion/en und das Verwenden von Informationen umfasst, die sich auf prospektive, das System beeinflussende Faktoren beziehen, um die optimalen Bedingungen, unter welchen zumindest einer der Diagnoseschritte durchzuführen ist, zu ermitteln.

2. Verfahren nach Anspruch 1, wobei das System ein Fahrzeugsystem ist.

3. Verfahren nach Anspruch 2, wobei die Informationen, die sich auf prospektive, das System beeinflussende Faktoren beziehen, die prospektive, mit dem Fahrzeug zu unternehmende Reise betreffen.

4. Verfahren nach Anspruch 3, wobei die Informationen, die sich auf prospektive, das System beeinflussende Faktoren beziehen, Informationen über zumindest eines der Folgenden umfassen: Richtung der vorausliegenden Strecke; Steigung der vorausliegenden Strecke; Streckenbedingungen; Verkehrsauslastung; Unfälle; Wetterbedingungen; Anzahl der Spuren; und Kategorie der Strecke.

5. Verfahren nach einem vorherigen Anspruch, wobei sich die Diagnoseschritte auf die Systememissionen beziehen.

6. Verfahren nach einem vorherigen Anspruch, wobei die Informationen, die sich auf prospektive, das System beeinflussende Faktoren beziehen, GPS-Informationen umfassen.

7. On-board-Diagnosevorrichtung für ein System, wobei die Vorrichtung angeordnet ist, um einen oder mehrere Diagnoseschritt/e hinsichtlich einer oder mehrerer Systemfunktion/en durchzuführen und um Informationen zu verwenden, die sich auf prospektive, das System beeinflussende Faktoren beziehen, um die optimalen Bedingungen, unter welchen zumindest einer der Diagnoseschritte durchzuführen ist, zu ermitteln.

8. Vorrichtung nach Anspruch 7, wobei das System ein Fahrzeugsystem ist.

9. Vorrichtung nach Anspruch 8, wobei die Informationen, die sich auf prospektive, das System beeinflussende Faktoren beziehen, die prospektive, mit dem Fahrzeug zu unternehmende Reise betreffen.

10. Vorrichtung nach Anspruch 9, wobei die Informationen, die sich auf prospektive, das System beeinflussende Faktoren beziehen, Informationen über zumindest eines der Folgenden umfassen: Richtung der vorausliegenden Strecke; Steigung der vorausliegenden Strecke; Streckenbedingungen; Verkehrsauslastung; Unfälle; Wetterbedingungen; Anzahl der Spuren; und Kategorie der Strecke.

11. Vorrichtung nach einem der Ansprüche 7 bis 10, wobei die Informationen, die sich auf prospektive, das System beeinflussende Faktoren beziehen, GPS-Informationen umfassen.

12. Computerprogramm mit Kodierungsmitteln zum Durchführen der Schritte nach einem der Ansprüche 1 bis 6, wenn das Programm auf einem Computer oder einem Mikroprozessor ausgeführt wird.

## Revendications

1. Procédé de diagnostic embarqué pour un système, le procédé comprenant l'exécution d'une ou plusieurs étapes de diagnostic par rapport à une ou plusieurs fonctions du système, dans lequel le procédé comprend l'utilisation d'informations concernant des facteurs prospectifs influençant le système pour déterminer les conditions optimales dans lesquelles exécuter au moins l'une des étapes de diagnostic.

2. Procédé selon la revendication 1, dans lequel le système est un système véhiculaire.

3. Procédé selon la revendication 2, dans lequel les informations concernant des facteurs prospectifs influençant le système portent sur le trajet prospectif à suivre par le véhicule.

4. Procédé selon la revendication 3, dans lequel les informations concernant des facteurs prospectifs influençant le système comprennent des informations sur au moins l'un des éléments suivantes : la direction de la route à suivre ; le gradient de la route à suivre ; l'état de la route ; les conditions de circulation ; les accidents ; les conditions météorologiques ; le nombre de voies ; et la catégorie de route.

5. Procédé selon l'une quelconque des revendications précédentes, dans lequel les étapes de diagnostic portent sur les émissions du système.

6. Procédé selon l'une quelconque des revendications précédentes, dans lequel les informations concernant des facteurs prospectifs influençant le système comprennent des informations de GPS (Global Positioning System - système de positionnement global).

7. Appareil de diagnostic embarqué pour un système, l'appareil étant agencé pour exécuter une ou plusieurs étapes de diagnostic par rapport à une ou plusieurs fonctions du système, dans lequel l'appareil est agencé pour utiliser des informations concernant des facteurs prospectifs influençant le système pour déterminer les conditions optimales dans lesquelles exécuter au moins l'une des étapes de diagnostic.

8. Appareil selon la revendication 7, dans lequel le système est un système véhiculaire.

9. Appareil selon la revendication 8, dans lequel les informations concernant des facteurs prospectifs influençant le système portent sur le trajet prospectif à suivre par le véhicule.

10. Appareil selon la revendication 9, dans lequel les informations concernant des facteurs prospectifs influençant le système comprennent des informations sur au moins l'un des éléments suivantes : la direction de la route à suivre ; le gradient de la route à suivre ; l'état de la route ; les conditions de circulation ; les accidents ; les conditions météorologiques ; le nombre de voies ; et la catégorie de route.

11. Appareil selon l'une quelconque des revendications 7 à 10, dans lequel les informations concernant des facteurs prospectifs influençant le système comprennent des informations de GPS (Global Positioning System - système de positionnement global).

12. Programme informatique comprenant des moyens de code pour effectuer les étapes selon l'une quelconque des revendications 1 à 6 lorsque ledit programme est exécuté sur un ordinateur ou un microprocesseur.
